Europäisches Patentamt

European Patent Office

Office européen des brevets

(19)

(11) Veröffentlichungsnummer: **0 240 502**
**B1**

# (12) EUROPÄISCHE PATENTSCHRIFT

(45) Veröffentlichungstag der Patentschrift:
25.10.89

(21) Anmeldenummer: 86903255.7

(22) Anmeldetag: 20.06.86

(86) Internationale Anmeldenummer:
PCT/DE 86/00257

(87) Internationale Veröffentlichungsnummer:
WO 87/02418 (23.04.87 Gazette 87/09)

(51) Int. Cl.⁴: **F 02 D 41/34**, F 02 D 41/36

(54) STEUERSYSTEM FÜR EINSPRITZDÜSEN.

(30) Priorität: 09.10.85 DE 3536034

(43) Veröffentlichungstag der Anmeldung:
14.10.87 Patentblatt 87/42

(45) Bekanntmachung des Hinweises auf die Patenterteilung:
25.10.89 Patentblatt 89/43

(84) Benannte Vertragsstaaten:
DE FR GB

(56) Entgegenhaltungen:
EP-A-0 058 562
EP-A-0 085 909
EP-A-0 113 553
DE-A-3 238 314
US-A-4 442 822

R.Bosch GmbH, Technische Unterrichtung,
"Motronic", 2.Ausgabe, Sept. 1985, S.11

(73) Patentinhaber: ROBERT BOSCH GMBH, Postfach
50, D-7000 Stuttgart 1 (DE)

(72) Erfinder: ENGEL, Gerhard, Burghaldenweg 8A,
D-7000 Stuttgart 30 (DE)
Erfinder: KÜTTNER, Thomas, Lindenbachstrasse 69,
D-7000 Stuttgart 31 (DE)
Erfinder: STÜNKEL, Rolf, Muggensturmerstrasse
25, D-7000 Stuttgart 31 (DE)
Erfinder: WESSEL, Wolf, Mühlstrasse 27, D-7141
Oberriexingen (DE)

EP 0 240 502 B1

## Beschreibung

Die Erfindung betrifft ein System zur Steuerung des Spritzbeginns und der Einspritzmenge gemäß dem Oberbegriff des Anspruchs 1. Ein solches System ist aus der EP-A-0 058 562 bekannt. Dort wird ein System beschrieben, bei dem der Zeitpunkt für den Spritzbeginn und die Einspritzmenge des Kraftstoffs abhängig von motorspezifischen Daten und betriebsabhängigen Parametern bestimmt werden, wobei wenigstens ein Impulsgeber zur Drehzahlbestimmung, Synchronisierung und als Spritzbeginn-Bezugsmarkengeber dient, wobei der Impulsgeber auf der Kurbelwelle Synchronisierungs- und Referenzimpulse enthaltende Impulszüge abgibt. Die Drehzahl wird erst nach zwei vollständigen Umdrehungen der Kurbelwelle bestimmt. Abhängig von diesem Drehzahlwert wird die einzuspritzende Kraftstoffmenge berechnet. Eine solche Einrichtung hat den Nachteil, daß durch Laständerungen oder durch andere Einflüsse hervorgerufene Drehzahländerungen bei der Berechnung des Spritzbeginns und der Einspritzmenge nicht mehr berücksichtigt werden können, da die Drehzahl erst nach zwei Kurbelwellenumdrehungen erfaßt wird.

Ferner ist aus "Motronic", 2. Ausgabe, September 1985, Robert Bosch GmbH, Seite 11 eine Einrichtung bekannt, bei der auf der Kurbelwelle ein Geber für den Kurbelwellenwinkel und die Drehzahlerfassung angeordnet ist.

## Vorteile der Erfindung

Das erfindungsgemäße System mit den Merkmalen des Hauptanspruchs hat demgegenüber den Vorteil, daß zur Drehzahlbestimmung und Synchronisierung ein einziger Impulsgeber ausreichen kann, der einen Impulszug mit wenigstens teilweise unterschiedlich großen Impulsabständen abgibt. Als Impulsgeber kann beispielsweise ein induktiver Geber in Verbindung mit einem auf der Nockenwelle angebrachten Zahnrad verwendet werden. Das Zahnrad kann als Synchronmarke einen zusätzlichen Zahn oder eine Zahnlücke aufweisen, die im Impulszug an der entsprechenden Stelle einen gegenüber den übrigen Impulsen unterschiedlichen Impulsabstand erzeugt. Mit einer geeigneten Auswerteschaltung kann diese Unsymmetrie und damit die Synchronisiermarke detektiert und zusammen mit Drehzahlimpulsen der Motorsteuerung zugeführt werden. Um den Spritzbeginn und die Einspritzmenge, die durch die Einspritzdauer bestimmt sein kann, möglichst exakt zu bestimmen, wird die momentane Drehzahl möglichst kurz vor dem Spritzbeginn bestimmt. Durch Laständerungen oder andere Einflüsse hervorgerufene Drehzahlschwankungen können dadurch nur noch in einem sehr geringen Maße eine Abweichung von der errechneten Drehzahl und der tatsächlichen Drehzahl zum Zeitpunkt des Spritzbeginns hervorrufen.

Bei dem erfindungsgemäßen System kann auch vorgesehen sein, daß zur Bereitstellung von Referenzimpulsen und Drehzahlimpulsen auf der Nockenwelle und/oder der Kurbelwelle ein Impulsgeber angeordnet ist. Zur Bestimmung des Spritzbeginns kann es zweckmäßig sein, einen entsprechenden Impulsgeber auf der Kurbelwelle anzuordnen, während zur Bestimmung der Momentandrehzahl ein geeigneter Impulsgeber mit der Nockenwelle verbunden sein kann. Je nach Anwendungsfall kann jedoch auch ein einziger Impulsgeber für die Bestimmung der Momentandrehzahl und des Spritzbeginns ausreichend sein. Ein mit der Kurbelwelle gekoppelter Impulsgeber kann Referenzimpulse erzeugen, nach denen um eine drehzahlabhängige und kennfeldabhängige Verzögerungszeit jeweils die Kraftstoffeinspritzung beginnt. Die Verzögerungszeit wird dabei von der Motorsteuerung berechnet.

Der von einem Impulsgeber in Verbindung mit einem Zahnrad erzeugte Impulszug enthält eine Synchronisierschwingung, die durch die Synchronisiermarke - Zahnlücke oder Zusatzzahn - erzeugt wird, und eine von den übrigen Zähnen erzeugte Drehzahlschwingung. Die durch die Synchronisiermarke erzeugte Synchronisierschwingung besitzt vorzugsweise die doppelte Periodendauer wie die Drehzahlschwingung. Dadurch wird ein kontinuierlicher Übergang von der Synchronisierschwingung zur Drehzahlschwingung erreicht. Dabei ist es vorteilhaft, die Zähnezahl ohne Synchronisiermarke so zu wählen, daß diese ein ganzzahliges Vielfaches und wenigstens das Dreifache der Anzahl der Zylinder beträgt.

Wird eine verhältnismäßig hohe Zähnezahl verwendet, so kann der Bordrechner bzw. die Motorsteuerung dadurch entlastet werden, daß nach erfolgter Synchronisierung nicht ständig sämtliche Zähne im Rechner ausgewertet werden, sondern daß lediglich im Bereich des Referenzimpulses die Zähne zur Bestimmung der Drehzahl und zur Feststellung irgendwelcher Änderungen ausgewertet werden. Zur Bestimmung der Momentandrehzahl kann beispielsweise der Abstand zwischen zwei Zähnen vor dem Referenzimpuls verwendet werden.

Die Erfindung wird nachfolgend anhand der Zeichnung näher erläutert. Es zeigen:

Figur 1 den zeitlichen Verlauf der Winkelgeschwindigkeit der Nockenwelle und zugehörige Impulsdiagramme,

Figur 2 eine Auswerteschaltung für die vom Drehzahlgeber abgegebenen Impulse und

Figur 3 a - i verschiedene bei der in Figur 2 dargestellten Auswerteschaltung auftretende Signale.

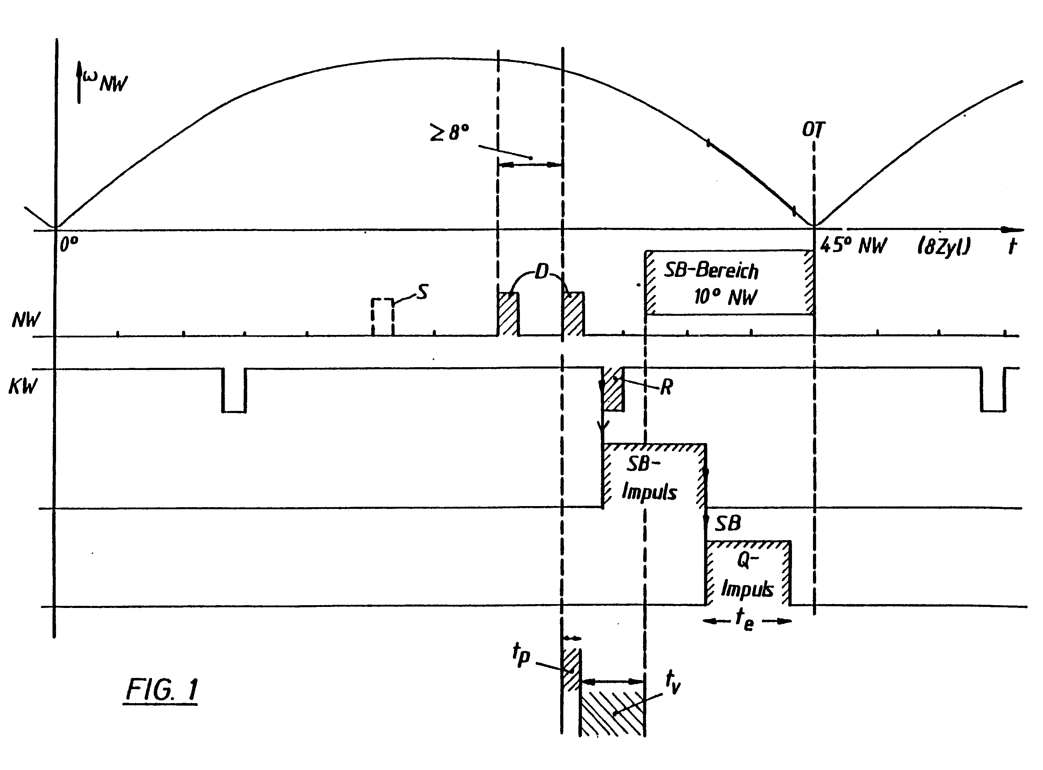

Bei dem in Figur 1 dargestellten Diagramm ist oben der zeitliche Verlauf der Winkelgeschwindigkeit $\omega_{NW}$ der Nockenwelle eines Achtzylinder-Motors angegeben. Bei 45° liegt der obere Totpunkt OT, wo die Winkelgeschwindigkeit $\omega_{NW}$ ein Minimum erreicht.

Darunter ist ein Teil des Impulszuges mit gleicher Zeitachse dargestellt, der von einem mit der Nockenwelle NW verbundenen Drehzahlgeber erzeugt wird. Der zeitliche Abstand zwischen den beiden hier dargestellten Impulsen dient als Meßstrecke für die Momentandrehzahl. Diese Meßstrecke entspricht einem Drehwinkel der Nockenwelle, der größer oder gleich 8° ist.

Ein mit der Kurbelwelle KW verbundener Impulsgeber erzeugt den mit KW gekennzeichneten Impulszug, wobei der Impuls R, der unmittelbar nach den für die Bestimmung der Momentandrehzahl dienenden Impulsen D auftritt, von einer am Impulsgeber der Kurbelwelle vorgesehenen Referenzmarke erzeugt wird. Der Impuls R kann daher auch als Referenzimpuls bezeichnet werden, mit dem der Spritzbeginn der Kraftstoffeinspritzung zeitlich verzögert eingeleitet wird. Die zeitliche Verzögerung und damit der eigentliche Spritzbeginn SB werden durch einen SB-Impuls bestimmt, der in Abhängigkeit von der jeweiligen Betriebssituation und in Abhängigkeit von motorspezifischen Daten von der Motorsteuerung errechnet wird. Am Ende des SB-Impulses wird der die Einspritzmenge Q bestimmende Q-Impuls erzeugt. Dabei ist die Einspritzmenge Q von der Einspritzdauer $t_e$ abhängig.

Die zeitliche Zuordnung der Drehzahlimpulse D und des Referenzimpulses R muß so gewählt sein, daß die erforderliche Programmlaufzeit $t_p$ des Rechners und die aufgrund der Elastizität zwischen Kurbelwelle und Nockenwelle auftretende Zeitverschiebung $t_v$ in jeder Betriebssituation eine rechtzeitige Bestimmung der Einspritzmenge und des Spritzbeginns gewährleistet ist. Der Spritzbeginn SB kann in einem Bereich von 10° vor dem oberen Totpunkt OT liegen.

Die separate Bestimmung des Spritzbeginns und der Einspritzmenge erfolgt vorzugsweise aus der zugehörigen Momentandrehzahl und aus motorspezifischen Kennfeldern. Die Momentandrehzahl wird im dargestellten Ausführungsbeispiel an der Nockenwelle NW gemessen und der Referenzimpuls R mittels eines an der Kurbelwelle KW angeordneten Impulsgebers erzeugt. Grundsätzlich kann jedoch auch ein gemeinsamer Impulsgeber für die Bestimmung der Momentandrehzahl und als Bezugsmarke für den Spritzbeginn verwendet werden. Ein solcher Impulsgeber kann im wesentlichen aus einem mit der Nockenwelle oder der Kurbelwelle verbundenen Zahnrad bestehen, dessen Zähne in einem induktiven Fühler einen Impulszug erzeugen.

Durch teilweise asymmetrische Anordnung der Zähne oder durch zusätzlich auf Lücke angeordnete Zähne oder durch weggelassene Zähne können am Zahnrad Synchronisiermarken angebracht sein, die im Impulszug als entsprechende Synchronisierschwingungen auftreten.

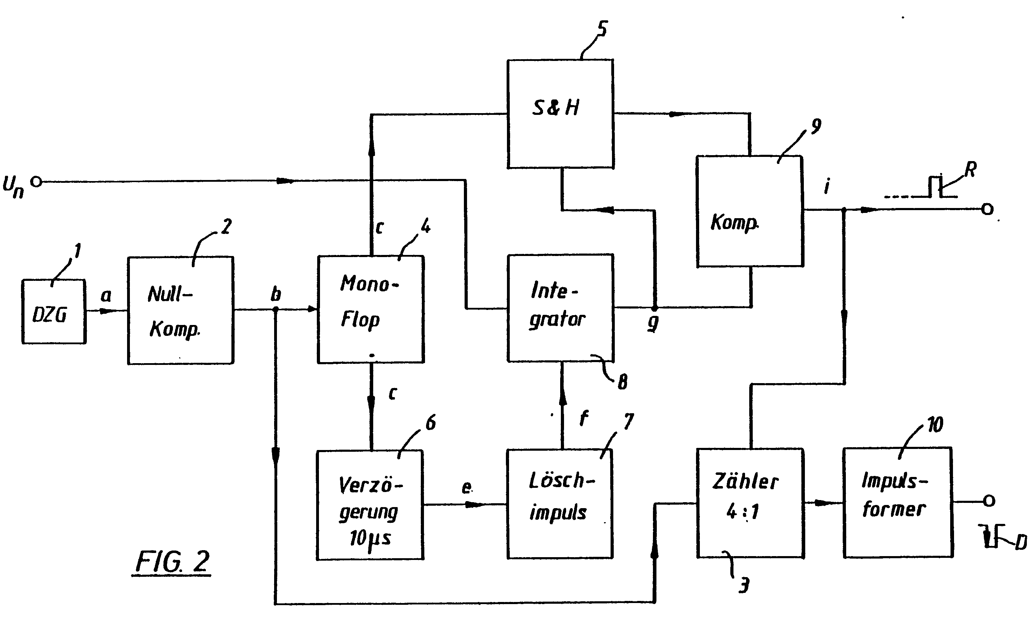

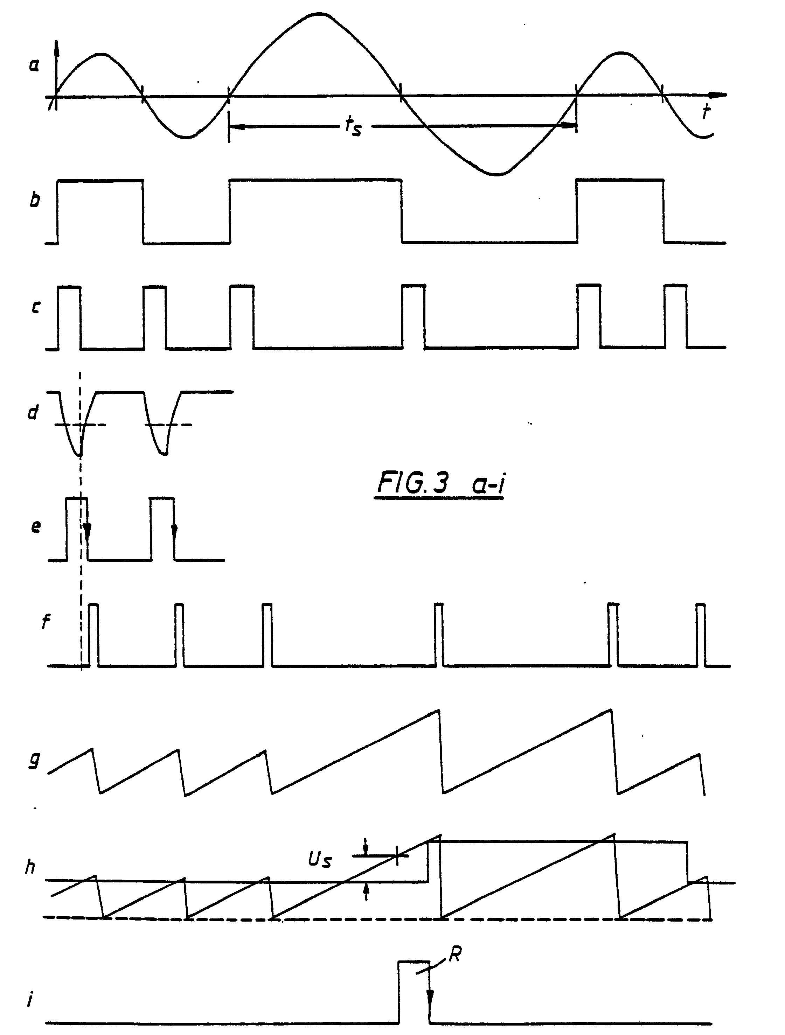

In Figur 2 ist eine Auswerteschaltung angegeben, die die in einem Impulszug enthaltenen Drehzahlimpulse und Synchronisierimpulse erkennt und getrennt ausgangsseitig an die nicht dargestellte Motorsteuerung abgibt. In Figur 3 sind die zugehörigen Diagramme verschiedener Signale angegeben, die in der in Figur 2 dargestellten Schaltung auftreten.

Der das Zahnrad und einen induktiven Fühler enthaltene Drehzahlgeber 1 gibt sein Ausgangssignal a an einen Nullkomperator 2 ab, der ausgangsseitig mit einem Zähler 3 und mit einer monostabilen Kippstufe 4 verbunden ist. Dem Zähler 3 und der monostabilen Kippstufe 4 wird das Signal b zugeführt. Die monostabile Kippstufe erzeugt bei jeder eingangsseitigen Flanke Impulse mit der Impulsdauer 30 µs, die einer Abtast- und Halteschaltung (Sample- and Hold-Schaltung) 5 und einer Verzögerungsschaltung 6 zugeführt werden. Der Ausgang der Verzögerungsschaltung 6 ist mit dem Eingang eines Löschimpulserzeugers 7 verbunden, der entsprechend dem Spannungsverlauf f (Figur 3) Löschimpulse an einen Integrator 8 liefert. Diese Löschimpulse setzen das Ausgangssignal g des Integrators 8 auf Null, so daß seine Ausgangsspannung erneut linear ansteigt. Das Ausgangssignal g stellt somit ein Sägezahnsignal dar, dessen Steilheit von der am Eingang des Integrators 8 anliegenden Spannung n abhängt. Die Spannung $U_n$ ist eine der Drehzahl proportionale Gleichspannung.

Die von der monostabilen Kippstufe 4 an die Abtast- und Halteschaltung 5 gelieferten Impulse stellen Übernahmeimpulse dar, die bewirken, daß der momentane Spannungswert der Sägezahnspannung g in der Schaltung 5 zwischengespeichert und ausgangsseitig dem einen Eingang eines Komperators 9 zugeführt wird. Dabei wird durch die Verzögerungsschaltung 6 sichergestellt, daß der vom Löschimpulserzeuger 7 abgegebene Löschimpuls später auftritt als der von der monostabilen Kippstufe 4 zur Abtast- und Halteschaltung 5 übertragene Übernahmeimpuls. Im Komperator 9 wird nun der in der Abtast- und Halteschaltung 5 zwischengespeicherte Spannungswert mit dem darauffolgenden Sägezahn der Sägezahnspannung g verglichen. Überschreitet dabei die Sägezahnspannung g den zuvor abgespeicherten Wert um eine vorgegebene Spannungsschwelle, so hat dies zur Folge, daß am Ausgang des Komperators 9 entsprechend dem Spannungsverlauf i ein Impuls S abgegeben wird, der den Synchronimpuls darstellt.

Mit dem Synchronimpuls wird gleichzeitig der Zähler 3 auf Null zurückgesetzt, wodurch dieser synchronisiert wird. Die im Spannungsverlauf b enthaltenen Drehzahlimpulse werden im Zähler 3 gezählt, der beispielsweise beim Überlauf ebenfalls automatisch auf Null gesetzt wird. Der Zähler 3 kann somit beispielsweise als 4:1-Teiler wirken. Im Ausführungsbeispiel ist dem Zähler 3 noch ein Impulsformer 10 nachgeschaltet, um die Drehzahlimpulse gegebenenfalls in geeignete Impulse für die weitere Verarbeitung umzuformen.

Durch die automatische Rücksetzung des Zählers nach beispielsweise vier ankommenden Drehzahlimpulsen wird sichergestellt, daß dieser Zähler auch dann zurückgesetzt wird, wenn bedingt durch eine Störung der Synchronimpuls S einmal ausfallen sollte.

Die verschiedenen Signalverläufe a bis i sind in entsprechenden Figuren 3a bis 3i mit einer gemeinsamen Zeitachse t dargestellt.

Das Drehzahlsignal a ist in dem Bereich dargestellt, wo eine Synchronisierschwingung der Dauer $t_s$ auftritt. Die übrigen Schwingungen stellen Drehzahlschwingungen dar. Der Nullkomperator 2 leitet aus diesen Schwingungen Drehzahlimpulse und Synchronisierimpulse ab, an jeder Flanke dieser Impulse erzeugt die monostabile Kippstufe 4 Impulse mit einer Dauer von beispielsweise 30 μs. In der Verzögerungsschaltung 6 treten in Verbindung mit einem Integrierglied Spannungsverläufe entsprechend der Figuren 3d und e auf. Bei der Rückflanke der verzögerten Impulse gemäß Signalverlauf e erzeugt der Löschimpulserzeuger 7 Löschimpulse gemäß Signalverlauf f. Die Ausgangsspannung des Integrators 8 entspricht dem Verlauf g, da diese Spannung bei jedem Löschimpuls auf Null gesetzt wird. Der Komperator 9 erzeugt bei Überschreiten einer vorgegebenen Spannschwelle $U_S$ (Figur 3h) den Synchronisierimpuls S gemäß Spannungsverlauf i.

**Patentansprüche**

1. Steuersystem, das den Spritzbeginn (SB) und die Einspritzmenge mehrerer Einspritzdüsen eines Verbrennungsmotores steuert, bei dem der Zeitpunkt für den Spritzbeginn und die Einspritzmenge, kurz vor dem Spritzbeginn, der von einem Referenzimpuls bestimmt ist, bzw. kurz vor der Mengenausgabe aus einer Synchronmarke (S), Referenzimpulsen (R) und weiteren motorspezifischen Daten und betriebsabhängigen Parametern, die zumindest die Drehzahl beibehalten, bestimmt werden, wobei mit der Kurbelwelle ein Referenzimpulsgeber verbunden ist, dadurch gekennzeichnet daß mit der Nockenwelle ein Impulsgeber gekoppelt ist, der Drehzahlimpulse (D) und die Synchronmarke (S) gibt und daß für jede Zumessung mit einer Meßstrecke pro Zylinder, die dem Abstand zweier aufeinanderfolgender Drehzahlimpulse (D) entspricht, eine Momentandrehzahl ermittelt wird, wobei die Drehzahlerfassung zeitlich unmittelbar vor dem Referenzimpuls (R) stattfindet, und die für den jeweiligen Zylinder maßgebliche Meßstrecke durch Zählvorgänge der Drehzahlimpulse (D) ausgehend von der Synchronmarke ermittelt wird.

2. System nach Anspruch 1, dadurch gekennzeichnet, daß die jeweilige Meßstrecke und/oder der Referenzimpuls (R) mit Hilfe der synchronmarke (S) und einem von dort aus zyklisch bis zur Zylinderzahl arbeitenden Zähler (3) dem zugehörigen Zylinder zugeordnet werden.

3. System nach Anspruch 2, dadurch gekennzeichnet, daß mit digitaler Auswertung für die Erkennung der ersten Meßstrecke nach der Synchronmarke (S) und zur Unterscheidung von Meßstrecke und langem Abstand zwischen Synchronmarke (S) und Meßstrecke nur ein einziger Schwellwert ($U_S$) benötigt wird.

4. System nach Anspruch 3, dadurch gekennzeichnet, daß der Schwellwert ($U_S$) umschaltbar ist.

5. System nach einem der Ansprüche 1 bis 4, dadurch gekennzeichnet, daß die Synchronmarke (S) im Maximum der momentanen Winkelgeschwindigkeit liegt.

6. System nach einem der vorhergehenden Ansprüche, dadurch gekennzeichnet, daß mit der Kurbelwelle (KW) gekoppelter Impulsgeber Referenzimpulse (R) erzeugt, die einem Vielfachen der Zylinderzahl entsprechen, und daß der Spritzbeginn (SB) um eine drehzahlabhängige und motorfeldabhängige Verzögerungszeit nach einem bestimmten, zu einem Zylinder gehörenden Referenzimpuls (R) liegt.

7. System nach einem der vorhergehenden Ansprüche, dadurch gekennzeichnet, daß als Impulsgeber ein die Zähne eines Zahnrades abtastender Geber vorgesehen ist, und daß das Zahnrad zur Synchronisierung als Synchronmarke (S) wenigstens einen zusätzlichen Zahn oder eine Zahnlücke hat, wobei der zusätzliche Zahn oder die Zahnlücke nur einmal pro Umdrehung der Nockenwelle (NW) vom Impulsgeber abgetastet wird.

8. System nach Anspruch 7, dadurch gekennzeichnet, daß als Zahnlücke ausgebildete Synchronmarke (S) eine Synchronisierschwingung erzeugt die die doppelte Periodendauer hat wie die Drehzahlschwingung.

9. System nach Anspruch 8, dadurch gekennzeichnet, daß die Zähne ohne Synchronmarke ein ganzzahliges Vielfaches wenigstens das Dreifache der Anzahl der Zylinder des Motors beträgt.

10. System nach einem der Ansprüche 8 oder 9, dadurch gekennzeichnet, daß nach erfolgter Synchronisierung die Synchronisierung, durch Auswertung der im näheren Bereich der Synchronmarke (S) angeordneten Zähne, überprüft wird.

11. System nach einem der vorhergehenden Ansprüche, dadurch gekennzeichnet, daß die vom Impulsgeber erzeugten Signale (a) in einer Auswerteschaltung in eine impulsförmige Spannung (b) umgewandelt werden, aus der die Auswerteschaltung die Referenzimpulse (R) und Drehzahlimpulse (D) ableitet und ausgangsseitig getrennt abgibt.

12. System nach einem der vorhergehenden Ansprüche, dadurch gekennzeichnet, daß der zusätzliche Synchronisierimpuls asymmetrisch zwischen zwei Drehzahlimpulsen (D) liegt, und daß die Abstände zwischen benachbarten Drehzahlimpulsen (D) und zwischen Synchronisierimpuls und benachbarten Drehzahlimpulsen (D) unterschiedlich groß sind.

## Claims

1. Control system which controls the beginning of injection (SB) and the injected quantity of several injection nozzles of an internal combustion engine, in which the time for the beginning of injection and the injected quantity are determined, closely before the beginning of injection which is determined by a reference pulse or shortly before the quantity output, from a synchronizing mark (S), reference pulses (R) and other engine-specific data and operation-dependent parameters which at least conclude the speed of rotation, the crankshaft being connected to a reference pulse transmitter, characterized in that a pulse transmitter, which emits speed pulses (D) and the synchronizing mark (S) is coupled to the camshaft and in that, for each proportioning, with one measuring distance per cylinder which corresponds to the distance between two successive speed pulses (D), an instantaneous speed of rotation is determined, the detection of the speed of rotation occurring immediately before the reference pulse (R) in time, and the measuring distance determining for the respective cylinder is determined by processes of counting the speed pulses (D), starting with the synchronizing mark.

2. System according to Claim 1, characterized in that the respective measuring distance and/or the reference pulse (R) are allocated to the associated cylinder with the aid of the synchronizing mark (S) and a counter (3) which cyclically works from there up to the number of cylinders.

3. System according to Claim 2, characterized in that with digital evaluation for the detection of the first measuring distance after the synchronizing mark (S) and for distinguishing between measuring distance and long distance between synchronizing mark (S) and measuring distance, only a single threshold value (U$_s$) is needed.

4. System according to Claim 3, characterized in that the threshold value (U$_S$) can be switched over.

5. System according to one of Claims 1 to 4, characterized in that the synchronizing mark (S) is located at the maximum of the instantaneous angular velocity.

6. System according to one of the preceding claims, characterized in that the pulse transmitter coupled to the crankshaft (KW) generates reference pulses (R) which correspond to a multiple of the number of cylinders, and in that the beginning of injection (SB) is located after a particular reference pulse (R) belonging to a cylinder by a speed-dependent and engine-characteristics-dependent delay time.

7. System according to one of the preceding claims, characterized in that a transmitter scanning the teeth of a toothed wheel is provided as pulse transmitter and in that the toothed wheel for synchronizing has at least one additional tooth or a tooth gap as synchronizing mark (S), the additional tooth or the tooth gap being scanned by the pulse transmitter only once per revolution of the camshaft (NW).

8. System according to Claim 7, characterized in that the synchronizing mark (S) constructed as tooth gap generates a synchronizing oscillation which has twice the period of the speed oscillation.

9. System according to Claim 8, characterized in that the teeth without synchronizing mark is (sic) an integral multiple of at least three times the number of cylinders of the engine.

10. System according to one of Claims 8 or 9, characterized in that, after synchronization has occurred, the synchronization is checked by evaluating the teeth arranged in the closer range of the synchronizing mark (S).

11. System according to one of the preceding claims, characterized in that the signals (a) generated by the pulse transmitter are converted in an evaluating circuit into a pulse-shaped voltage (b) from which the evaluating circuit derives and separately emits at the output the reference pulses (R) and speed pulses (D).

12. System according to one of the preceding claims, characterized in that the additional synchronizing pulse is located asymmetrically between two speed pulses (D) and that the distances between adjacent speed pulses (D) and between synchronizing pulse and adjacent speed pulses (D) are differently large.

## Revendications

1. Système de commande, commandant le début de l'injection (SB) et la quantité injectée par plusieurs buses d'injection d'un moteur à combustion interne, système dans lequel l'instant du début de l'injection et la quantité injectée sont déterminés peu avant le début de l'injection lequel est défini par une impulsion de référence ou bien peu avant la délivrance de la quantité à partir de repères de synchronisation (S), par des impulsions de référence (R) et d'autres données spécifiques du moteur et par des paramètres dépendant du fonctionnement de celui-ci, qui contiennent tout au moins la vitesse de rotation, un émetteur d'impulsions de référence étant relié à l'arbre de vilebrequin, système caractérisé en ce qu'avec l'arbre à came est couplé un générateur d'impulsions qui délivre des impulsions de vitesse de rotation (D) et les repères de synchronisation (S) et que pour chaque dosage avec une section de mesure par cylindre, qui correspond à la distance de deux impulsions successives de vitesse de rotation (D), une vitesse de rotation momentanée est déterminée, la détection de la vitesse de rotation s'effectuant dans le temps immédiatement avant l'impulsion de référence (R) et la section de mesure respectivement valable pour chacun des cylindres, étant déterminée par des processus de comptage des impulsions de vitesse de rotation (D) en partant du repère de synchronisation.

2. Système selon la revendication 1, caractérisé en ce que la section de mesure respective et/ou l'impulsion de référence (R) sont associées au cylindre correspondant à l'aide du repère de synchronisation (S) et à l'aide d'un compteur (3) fonctionnant cycliquement à partir de ce repère jusqu'au numéro du cylindre.

3. Système selon la revendication 2, caractérisé en ce que, grâce à l'exploitation numérique, pour la détection de la première section de mesure après le repère de synchronisation (S), et pour la différenciation de la section de mesure et du long intervalle entre le repère de synchronisation (S) et la section de mesure, seule une valeur de seuil unique ($U_S$) est utilisée.

4. Système selon la revendication 3, caractérisé en ce que la valeur de seuil ($U_S$) est commutable.

5. Système selon une des revendications 1 à 4, caractérisé en ce que le repère de synchronisation (S) se situe au maximum de la vitesse angulaire momentanée.

6. Système selon une des précédentes revendications, caractérisé en ce que le générateur d'impulsions couplé avec l'arbre du vilebrequin (KW) engendre des impulsions de référence (R) qui correspondent à un multiple du nombre de cylindres et que le début de l'injection (SB) est décalé après une impulsion de référence déterminée (R) associée à un cylindre d'un temps de retard dépendant de la vitesse de rotation et d'un champ caractéristique du moteur.

7. Système selon une des précédentes revendications, caractérisé en ce qu'il est prévu, comme émetteur d'impulsions, un émetteur explorant les dents d'une roue dentée, et cette roue dentée, pour permettre la synchronisation, comportant comme repère de synchronisation (S) au moins une dent supplémentaire ou bien un intervalle entre dents, auquel cas, cette dent supplémentaire ou cet intervalle entre dents, n'est explorée par le générateur d'impulsions qu'une seule fois pendant une révolution de l'arbre à came (NW).

8. Système selon la revendication 7, caractérisé en ce que le repère de synchronisation (S) constitué par un intervalle entre dents, produit une oscillation de synchronisation qui a une durée de période double de celle de l'oscillation de vitesse de rotation.

9. Système selon la revendication 8, caractérisé en ce que le nombre des dents sans repère de synchronisation, est un multiple entier et au moins le triple du nombre des cylindres du moteur.

10. Système selon une des revendications 8 ou 9, caractérisé en ce que, après que la synchronisation ait été effectuée, cette synchronisation est vérifiée par exploitation des dents disposées au voisinage immédiat du repère de synchronisation (S).

11. Système selon une des précédentes revendications, caractérisé en ce que les signaux (a) engendrés par le générateur d'impulsions sont convertis dans un circuit d'exploitation en une tension pulsée (b) à partir de laquelle le circuit d'exploitation dérive les impulsions de référence (R) et les impulsions de vitesse de rotation (D) et les délivre séparément côté sortie.

12. Système selon une des précédentes revendications caractérisé en ce que l'impulsion de synchronisation supplémentaire se situe asymétriquement entre deux impulsions de vitesse de rotation (D) et que les intervalles entre des impulsions voisines de vitesse de rotation (D) et entre l'impulsion de synchronisation et les impulsions voisines de vitesse de rotation (D), sont d'une importance différente.

$\omega_{NW}$

$\geq 8°$

OT

0°                                45° NW    (8Zyl)    $t$

D

S

SB-Bereich
10° NW

NW

KW

R

SB-
Impuls

SB

Q-
Impuls

$t_e$

$t_p$

$t_v$

*FIG. 1*

EP 0 240 502 B1

FIG. 2

EP 0 240 502 B1

FIG.3 a-i